Europäisches Patentamt

European Patent Office

Office européen des brevets

(11) Publication number: **0 509 592 A1**

# EUROPEAN PATENT APPLICATION

(21) Application number: **92201007.9**

(22) Date of filing: **08.04.92**

(51) Int. Cl.5: **B01D 3/00**, C10G 5/06, C10G 70/04

(30) Priority: **18.04.91 IT MI911071**

(43) Date of publication of application:
**21.10.92 Bulletin 92/43**

(84) Designated Contracting States:
**AT BE CH DE DK ES FR GB GR LI LU NL PT
SE**

(71) Applicant: **AGIP PETROLI S.p.A.**
**Via Laurentina 449**
**I-00142 Roma(IT)**

(72) Inventor: **Cerase, Antonio**
**Via Avicenna 101**
**I-00146 Rome(IT)**
Inventor: **D'Alberton, Andrea**
**S. Marco 3524**
**I-30124 Venice(IT)**

(74) Representative: **Roggero, Sergio et al**
**Ing. Barzanò & Zanardo Milano S.p.A. Via**
**Borgonuovo 10**
**I-20121 Milano(IT)**

(54) Improved process for recovering high-value hydrocarbon fractions from light refinery products.

(57) A process for the fractionation of light refinery products in which the condensed product yields are increased by the use of refrigerant fluids produced by an absorption refrigeration cycle fed with the sensible heat of the hot heavy fractions.

Fig.2

EP 0 509 592 A1

This invention relates to the recovery of the light hydrocarbon fractions produced in petroleum refinery processes, and in particular the improvement of propylene and LPG (liquefied petroleum gas) yields in refinery operations.

In petroleum refining processes, all products obtained must be fed to storage at a temperature lower than their flash point. This requirement has considerable consequences for both heavy and light products.

With regard to heavy products, which are generally obtained as bottom product or a side cut, they still possess considerable sensible heat, available at a temperature of 120°C and above. In spite of heat recovery operations, a large part of this heat is dispersed in cooling fluids to produce hot water in the best of cases, or is otherwise lost to cooling towers or to the air.

With regard to light fractions, obtained as overhead product in fractionation, the overhead temperature attained using cooling water at normal temperature is never below 35-40°C, resulting in incomplete recovery of the highest value light fractions, such as propylene and LPG, a considerable part of it being lost to the refinery gas used as fuel within the refinery, its worth then representing only its calorific value.

It would therefore be advantageous to operate at lower overhead temperatures, which would enable a larger part of these light products to be recovered, or alternatively would allow a lower operating pressure to be used, with consequent improved fractionation and reduced energy consumption.

In this respect, in the known art it has been proposed to improve the condensation yield of light products by increasing the fractionation pressure. This has proved however to be counter-productive for fractionation, in that at higher pressures the boiling points of the components to be separated are closer together, requiring higher reflux ratios.

The increase in operating pressure therefore results in an increase in the column bottom temperature, so increasing the temperature level of the entire process, and in an increase in the process heat consumption because of the increase, for the stated reason, in the reflux ratios required to satisfy product specifications.

In the known art it has also been proposed to use refrigeration cycles, operated by expansion turbines or electric motors, to provide low temperature cooling fluids which allow operation at lower overhead temperatures, but this results in additional energy consumption, which penalizes the refining economy.

According to the present invention, the low temperature cooling fluids required to improve yields of high-value light fractions are produced by using the low-value waste heat of the heavy petroleum fractions. The heat possessed by these fractions is available at 120°C and above, and is used to produce cooling water at 5-10°C. According to the invention, the light product fractionation is modified to incorporate all the benefits of this improved cooling level, enabling both the energy consumption for fractionation to be reduced and a higher yield of high-value light products to be obtained.

The present invention can be advantageously applied in the processing of light products originating from the various petroleum refining processes, however for descriptive simplification it is described hereinafter with reference to a typical embodiment in the fractionation of light fractions originating from catalytic cracking, by way of non-limiting example.

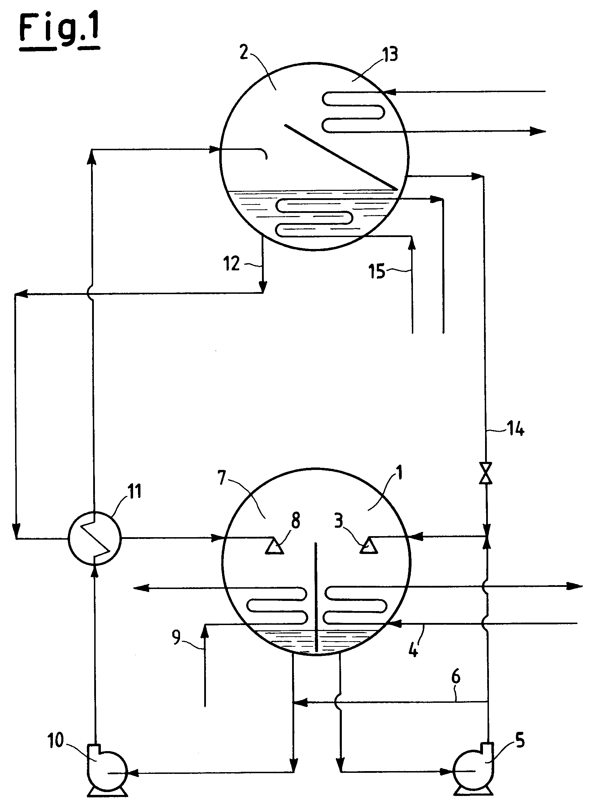

The refrigerant fluid is produced according to the present invention by an absorption refrigeration plant modified for the use of the waste heat contained in the hot heavy fractions. It is illustrated in Figure 1, in accordance with the known absorption refrigeration process using aqueous lithium bromide solutions (for example in Perry - Chemical Engineers Handbook - 6th Ed. - pages 12-39/12-41).

In the evaporator 1, which is maintained under vacuum at an absolute pressure of 0.65-1.4 kPa (0.2-0.4 mmHg), the diluted LiBr solution from the recycled stream from the generator 2 is sprayed via nozzles 3 onto the tubes of the tube bundle 4, through which the water to be refrigerated circulates.

Because of the low pressure, part of the water of the sprayed solution evaporates instantaneously, and the remaining solution becomes concentrated and cools.

The cold solution removes heat from the water circulating through 4, to cool it to a temperature of between 6 and 8°C.

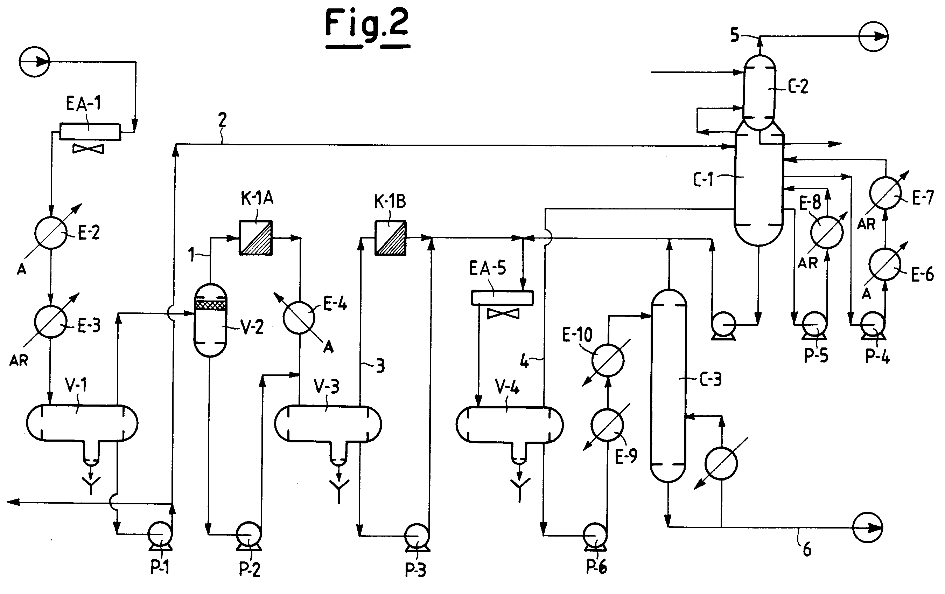

The thus refrigerated water is fed to the users for use in the fractionation cycle shown in Figure 2, in which the refrigerated water is indicated by AR, whereas A indicates normal cooling water at 25-30°C.

The cold concentrated LiBr solution which accumulates in the bottom of the evaporator 1 is withdrawn by the pump 5, partly recycled to the nozzles 3 and partly fed to the generator 2 through the line 6.

In the absorber 7 adjacent to the evaporator 1, and housed preferably in the same cylindrical casing, the water vapour developed by the expansion in the evaporator 1 is absorbed by a concentrated LiBr solution, which is highly hygroscopic and renders the absorption cycle very efficient.

This concentrated solution is sprayed through the nozzles 8. The water-seeking droplets of concentrated solution come into contact with the water vapour and condense it, so becoming diluted and hotter. It encounters the tube bundle 9 through which cooling water is circulated to absorb the heat deriving from

2

the condensation and solution dilution.

The solution, diluted in the absorber 7, is combined with the solution from the line 6, and is then fed by the pump 10 to the generator 2 after heat transfer in 11 against the bottom product of the generator 2.

In the generator 2 the LiBr solution is distilled to regenerate the concentrated LiBr solution for use in the absorber 7, it being recycled through the line 12 and cooled in the heat exchanger 11.

The steam generated by the distillation is condensed by the condenser 13 through which cooling water is circulated, and is then fed through the line 14 to the spray nozzles 3 of the evaporator 1.

The dilute solution is distilled in the generator 2 at a pressure of 6-8.5 kPa absolute (2.5-3.5 mmHg) with heat being provided by the heater tube bundle 15. In this, the heating fluid temperature must be at least 105-110°C.

According to the present invention, the tube bundle 15 uses the heat of the hot heavy fractions. The hot fraction is preferably circulated directly through it.

In a refinery there is generally a wide availability of waste heat contained in high-boiling liquid fractions which have to be cooled. For example, the heat fed to the refrigeration unit can be taken from the pumparounds and/or from the bottom products of the primary fractionation column of the fluid catalytic cracking plant itself, these having a suitable temperature and being largely used to produce hot water. Recoverable heat is widely available in the vacuum distillation pumparounds or in the light and heavy gasoils produced in topping, these having a temperature of around 180-200°C.

A further advantageous heat source is the overhead stream of the primary fractionation column of the catalytic cracking plant, which is condensed normally in air condensers with dispersal of the heat of condensation, whereas part of this heat could be used to feed the refrigeration unit.

Such excess waste heat is normally dissipated by producing hot water at a temperature close to 100°C, this being of little industrial use and where possible is destined for poorly remunerative civil or agricultural use.

As an alternative to direct use, such hot heavy fractions can be used in the process of the invention to heat an intermediate fluid such as diathermic oil or pressurized water, which is heated to a temperature of 110-130°C and then used in the tube bundle. Direct use of the sensible heat of these heavy petroleum fractions is however more simple and enables the temperature differences to be better used.

The process according to the invention for the fractionation of light petroleum fractions produced in a fluid catalytic cracking plant is illustrated in Figure 2.

This process diagram shows the final part of the fractionation downstream of the primary fractionation, and which is modified for better use of the temperature levels obtainable with the refrigerated water.

The light fraction, consisting of components having a boiling point of less than 175°C, originates from the primary fractionation overheads and is cooled firstly in the air heat exchanger EA1 and then in the heat exchanger E2 using cooling water, to about 38°C, as in the conventional process, and is then further cooled in the heat exchanger E3 using cooling water at 7°C to condense a further part of the low boiling fractions, operating at a pressure of about 100 kPa gauge.

The liquid phase and vapour phase separate in the accumulator V1, the condensed water layer in its lower part being discharged.

The liquid phase is withdrawn by the pump P1 and divided into two parts. One part equal to about one third of the total is recycled as reflux to the top of the primary fractionation column, and the remainder is fed to the gas absorption columns C1 and C2.

The fact of having reduced the reflux temperature to 25°C instead of 38°C increases the efficiency of said reflux, and does not form undesirable salts and hydrates with the outflowing fractions of the catalytic cracking process, which would constitute very dangerous compounds for the plant operation. The vapour fraction is withdrawn from the top of V1, passes to the separator V2 in which liquid separation is completed, and is then drawn into the first stage K1a of the compressor K1.

The first stage K1a raises the pressure to about 0.6 MPA (6 bar) gauge. The compressed gas is cooled in E4 with water, combined with the liquid phase drawn from V2 by the pump P2 and then fed into the separator vessel V3. The liquid phase and vapour phase separate in the vessel V3 and the condensed water layer in its bottom is discharged.

The two phases are raised to a pressure of about 1.8 MPA gauge, the liquid phase by the pump P3 and the vapour phase by the second stage K1b of the compressor K1. These two streams are combined and added to the bottom fraction of the absorption column C1 and to the overhead fraction of the stripper column C3.

This mixture is cooled in the air heat exchanger EA5 and fed into the separator V4, which separates it into a gaseous phase which is fed to the bottom of the primary absorption column C1 and a liquid phase which is fed into the stripper C3, the condensed water layer in its lower part being discharged.

The liquid fraction indicated by 2 and separated in V1 is recontacted in countercurrent in the primary absorption column C1 with the gaseous phase separated in V4, and with the intermediate intercooling stages shown in Figure 2. The upper intercooling stage consists of the pump P4, the heat exchanger E6 using normal cooling water which reduces the temperature to 33°C, and the heat exchanger E7 using refrigerated water which reduces the temperature to 18°C.

The lower intercooling stage consists of the pump P5 and the heat exchanger E8 using refrigerated water, which reduces the temperature of the reintroduced liquid to 17°C.

The gas from the top of the absorber C1 is fed into the absorption column C2 through a connection line. A relatively high boiling hydrocarbon fraction is introduced at about 50°C into the top of C2 from the primary fractionation, to wash the gas rising in the column and enrich itself with its higher boiling components. This fraction is returned to the primary fractionation.

A gas stream is taken from the top of C2 and washed (not shown in the figure) to remove its hydrogen sulphide, and is then fed for use as fuel gas.

The liquid fraction separated in V4 is withdrawn by the pump P6, preheated to about 60°C with recovered heat in the heat exchangers E9 and E10 and then fed into the stripper column C3. Its reboiler E11 is also fed with recovered heat from hot streams from other parts of the plant.

A light vapour-phase fraction is obtained from the top of C3 and recycled to EA5, from its bottom there being obtained a liquid fraction currently known as de-ethanized naphtha.

This fraction is then subjected to conventional stabilization and final fractionation (not shown in the figure), which separate the various cuts:

- propylene
- LPG
- light gasoline
- heavy gasoline.

The advantages of the process according to the invention will be more apparent from the ensuing example which compares the conventional process using normal cooling water with the process of the invention using the additional heat exchanger E3 and the additional intercooling in the column C1 using refrigerated water in the heat exchangers E7 and E8, in place of normal cooling water.

EXAMPLE

The comparison is conducted with reference to an existing catalytic cracking plant for processing 50000 barrels per day of vacuum gasoil.

The throughput, composition and physical characteristics of the various streams, namely:

1: feed gas to K1a
2: liquid fraction from V1
3: feed gas to K1b
4: gaseous fraction from V4
5: product gas
6: stabilized naphtha

are shown in Table 1 for the conventional fractionation process and in Table 2 for the process according to the invention.

The two compared cases show a secondary balance disparity, due essentially to the effect of the reflux from V1 with different primary fractionation temperatures.

As can be seen on examining the values given in the tables, the temperature reduction of 13°C in V1 and 15°C in the intercooling in C1 lead to considerable shifts in the distribution between liquid fraction and vapour fraction.

In V1 this distribution passes from 0.86 (90/104.4) to 1.22 (105.7/86.9) in favour of the liquid phase. If constructing a plant from new, the investment required for the final fractionation part would be considerably less, as the equipment sizing (including the compressor) would be based essentially on the vapour-phase throughputs.

The refinery gas, the product of least value, reduces from 25.3 to 23.1 t/h, while the stabilized naphtha increases from 161.6 to 163.8 t/h.

This shift is very significant for the profitability of the plant modified in accordance with the process of the present invention.

In the case under examination, the heat source for the refrigeration unit is the lower pumparound stream of the vacuum distillation, available at 190°C, this determining the minor modifications to the existing configuration.

The refrigeration unit withdraws $9x10^6$ kcal/h from this stream to produce $5.7x10^6$ kcal/h of cold at 7°C.

This cold is used to the extent of $3.7x10^6$ kcal/h in E3, $1.0x10^6$ kcal/h in E7 and $1.0x10^6$ kcal/h in E8. The total refrigerated water flow rate is 1140 $m^3$/h, with a temperature rise of 5°C, ie from 7°C to 12°C.

The use of the refrigeration unit also involves a supplementary energy consumption of about 200 kwh/h, including the energy for circulating the refrigerated water through the users E3, E7 and E8. The cooling water requirement of the unit is about 1800 $m^3$/h, but this water corresponds to that required for cooling the pumparound when its heat is not used in the refrigeration unit.

The process of the invention reduces the absorbed power of the compressor K1 from 5900 to 5400 kw, to obtain the following additional annual production at the expense of the refinery gas of stream 5:

- a propylene increase of 9500 t/a (about 10%)
- an LPG increase of 2100 t/a (about 2%)
- a gasoline increase of 320 t/a,

recovered from the stabilized naphtha fraction downstream of the column C3.

TABLE 1

| STREAM | 1 | 2 | 3 | 4 | 5 | 6 |
|---|---|---|---|---|---|---|
| Component: | | | | | | |
| Inerts | 2396 | 2 | 2389 | 2454 | 2382 | - |
| Hydrogen | 216 | - | 215 | 219 | 215 | - |

| | | | | | | |
|---|---|---|---|---|---|---|
| Methane | 5603 | 21 | 5536 | 6176 | 5472 | – |
| Ethylene | 3589 | 44 | 3460 | 4880 | 3363 | – |
| Ethane | 5371 | 88 | 5115 | 8188 | 4952 | – |
| $H_2S$ | 4864 | 121 | 4549 | 8820 | 4364 | 39 |
| Propylene | 16696 | 793 | 14701 | 16217 | 2691 | 14031 |
| Propane | 5153 | 281 | 4456 | 4088 | 524 | 4761 |
| i-Butane | 7490 | 1032 | 5440 | 1908 | 288 | 7993 |
| i-Butene | 6711 | 1068 | 4697 | 1476 | 245 | 7297 |
| n-Butane | 3390 | 636 | 2249 | 626 | 102 | 3779 |
| 2-Butene t | 5590 | 1094 | 3666 | 991 | 174 | 6274 |
| 2-Butene c | 4183 | 877 | 2679 | 695 | 115 | 4749 |
| $C_5$-95°C | 31571 | 83992 | 10157 | 2528 | 294 | 112721 |
| 95-175°C | | | | | | |
| Water | 1584 | – | 315 | 125 | 125 | – |
| TOTAL Kg/h | 104407 | 90049 | 69624 | 59391 | 25306 | 161644 |
| | | | | | | |
| PHYSICAL STATE | Vap | Liq | Vap | Vap | Vap | Liq |
| PRESS.G. MPA | 0.08 | 1.7 | 0.64 | 1.7 | 1.68 | 1.89 |
| TEMP. °C | 38 | 38 | 38 | 38 | 61 | 122 |
| MW | 41.7 | – | 36.4 | 31.1 | 24.3 | – |

TABLE 2

| STREAM | 1 | 2 | 3 | 4 | 5 | 6 |
|---|---|---|---|---|---|---|
| Component: | | | | | | |
| Inerts | 2395 | 3 | 2392 | 2466 | 2382 | – |
| Hydrogen | 215 | – | 215 | 220 | 215 | – |
| Methane | 5600 | 34 | 5571 | 6322 | 5474 | – |
| Ethylene | 3584 | 74 | 3527 | 5370 | 3364 | – |

| | | | | | | |
|---|---|---|---|---|---|---|
| Ethane | 5357 | 151 | 5242 | 9541 | 4915 | 3 |
| H$_2$S | 4868 | 204 | 4725 | 12867 | 4174 | 246 |
| Propylene | 15702 | 1391 | 14820 | 18652 | 1150 | 15587 |
| Propane | 4874 | 500 | 4561 | 4560 | 300 | 4993 |
| i-Butane | 6726 | 1842 | 5773 | 2106 | 255 | 8025 |
| i-Butene | 5919 | 1899 | 4983 | 1632 | 206 | 7334 |
| n-Butane | 2927 | 1115 | 2395 | 692 | 80 | 3800 |
| 2-Butene t | 4783 | 1927 | 3889 | 1096 | 135 | 6312 |
| 2-Butene c | 3530 | 1547 | 2834 | 769 | 84 | 4779 |
| C$_5$-95°C | 18581 | 46629 | 10295 | 2656 | 177 | 63373 |
| 95-175°C | 1146 | 48410 | 109 | 154 | 159 | 49403 |
| Water | 669 | – | 323 | – | – | – |
| TOTAL  Kg/h | 86876 | 105725 | 71651 | 69103 | 23069 | 163854 |
| | | | | | | |
| PHYSICAL STATE | Vap | Liq | Vap | Vap | Vap | Liq |
| PRESS.  MPA | 0.09 | 1.7 | 0.64 | 1.74 | 1.68 | 1.89 |
| TEMP. °C | 25 | 25 | 38 | 38 | 59 | 119 |
| MW | 39.34 | – | 36.6 | 31.78 | 23.31 | – |

## Claims

1.  An improved process for recovering high-value hydrocarbon fractions, such as propylene and LPG, from light refinery fractions, comprising the use of refrigerant fluids for lowering the temperature level of the operations involved in the separation of these high-value hydrocarbon fractions from the refinery gas destined for use as fuel in the said refinery processes, characterised in that said refrigerant fluids are produced in an absorption refrigeration cycle employing aqueous lithium bromide solutions, which uses as its heat source the sensible heat still possessed by hot high-boiling petroleum products available in the actual refinery plants.

2.  An improved process for recovering high-value hydrocarbon fractions, such as propylene and LPG, from light refinery fractions as claimed in claim 1, characterised in that the refrigerant fluid consists of cooling water produced at 5-10°C.

3.  An improved process for recovering high-value hydrocarbon fractions, such as propylene and LPG, from light refinery fractions as claimed in claims 1 to 2, characterised in that the heat source for the refrigeration plant is a recirculation stream, known as the pumparound, in the vacuum distillation of the prepared crude, available at a temperature exceeding 120°C, and preferably between 180 and 200°C.

4.  An improved process for recovering high-value hydrocarbon fractions, such as propylene and LPG, from light refinery fractions as claimed in claims 1 to 2, characterised in that the heat source for the refrigeration plant is a hot stream of gasoil produced in the atmospheric distillation of the prepared crude, known as topping, available at a temperature exceeding 120°C, and preferably between 180 and 200°C.

5. An improved process for recovering high-value hydrocarbon fractions, such as propylene and LPG, from light refinery fractions as claimed in claims 1 to 2, characterised in that the heat source for the refrigeration plant is a pumparound or the hot bottom product of the main fractionation of a fluid catalytic cracking plant, available at a temperature exceeding 120°C, and preferably between 180 and 200°C.

6. An improved process for recovering high-value hydrocarbon fractions, such as propylene and LPG, from light refinery fractions as claimed in claims 1 to 2, characterised in that the heat source for the refrigeration plant is the overhead stream of the primary fractionation column of the catalytic cracking plant, recovering part of its heat of condensation.

7. An improved process for recovering high-value hydrocarbon fractions, such as propylene and LPG, from light refinery fractions as claimed in one or more of the preceding claims, characterised in that the treated hydrocarbon fractions are produced by fluid catalytic cracking, the refrigerant fluid being used to cool the overhead product of the main fractionation and in one or more of the intercooling stages of the primary absorption of the column C1 of the diagram of Figure 2.

8. An improved process for recovering high-value hydrocarbon fractions, such as propylene and LPG, from light refinery fractions as claimed in claim 7, characterised in that the overhead product of the main fractionation is cooled to about 25°C in the heat exchanger E3, and the intercooled streams are cooled to about 17-18°C in the heat exchangers E7 and E8.

# Fig.1

# Fig.2

EP 0 509 592 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 188 408 (AIR PRODUCTS AND CHEMICALS) 30 September 1987 * claims 1,6,10; figure 3 * | 1-8 | B01D3/00 C10G5/06 C10G70/04 |
| Y | CEP vol. 72, no. 7, 1 July 1976, NEW YORK pages 58 - 64; NULL: 'Heat Pumps in Destillation' * figure 2 * | 1-8 | |
| A | WO-A-8 201 323 (ERICKSON) 29 April 1982 * page 7, line 1 - line 19; claims 1-9; figure 2 * | 1-8 | |
| D,A | PERRY 'PERRY'S CHEMICAL ENGINEERS' HANDBOOK' , MC GRAW-HILL , NEW YORK * page 12-39 - page 12-41 * | 1 | |
| | | | TECHNICAL FIELDS SEARCHED (Int. Cl.5) |
| | | | B01D C10G |

The present search report has been drawn up for all claims

| Place of search | Date of completion of the search | Examiner |
|---|---|---|
| THE HAGUE | 19 MAY 1992 | MICHIELS P. |